# EUROPEAN PATENT SPECIFICATION

(11) **EP 3 337 146 B1**
(45) Date of publication and mention of the grant of the patent: **11.09.2019**
(21) Application number: 17206536.9
(22) Date of filing: 11.12.2017
(51) Int. Cl.: H04L 29/08, G06F 3/0488, G06F 3/0481, H04L 12/18, H04M 1/725, H04L 12/58

(54) **METHOD AND APPARATUS FOR DISPLAYING NOTIFICATION MESSAGE**
VERFAHREN UND VORRICHTUNG ZUR ANZEIGE VON BENACHRICHTIGUNGSMELDUNGEN
PROCÉDÉ ET APPAREIL POUR AFFICHER UN MESSAGE DE NOTIFICATION

(30) Priority: 14.12.2016 CN 201611151056
(43) Date of publication of application: 20.06.2018
(73) Proprietor: Beijing Xiaomi Mobile Software Co., Ltd., Beijing 100085 (CN)
(72) Inventor: ZHU, Ruixian, Beijing, Beijing 100085 (CN); LI, Minghao, Beijing, Beijing 100085 (CN); WANG, Shuo, Beijing, Beijing 100085 (CN)
(74) Representative: Jeffrey, Philip Michael

(56) References cited:
- US-A1- 2013 290 879
- US-A1- 2015 215 258
- Anonymous: "Bundled Notifications in Android | DiscoverSDK Blog", , 12 November 2016 (2016-11-12), pages 1-5, XP055462182, Retrieved from the Internet: URL:http://www.discoversdk.com/blog/bundle d-notifications-in-android [retrieved on 2018-03-22]

## Description

### FIELD

The present disclosure relates to a field of terminal technology, and more particularly, to a method and an apparatus for displaying a notification message.

### BACKGROUND

With the development of notification technology, a mobile terminal device plays a significant role in people's life. Various applications can be installed in the terminal and some of these applications may push notification messages to the terminal. When the terminal receives a notification message pushed by an application, the notification message may be loaded in a notification bar for display. US2013290879A1 discloses a method for grouping notification messages together into a single line item that can be displayed with other received messages from a message store on a portable electronic device. The portable electronic device may provide a user friendly interface for displaying a plurality of notification messages as a grouped line item in an ordered list with other messages, such as e-mail messages or other communication messages. Non-patent document titled "Bundled Notifications in Android I OiscoverSOK Blog" (retrieved from the Internet: URL:http://www.discoversdk.com/blog/bundled-notifications-in-android) discloses a tutorial of Bundled Notifications in Android. By bundling notifications into a group, users will be able to act on the entire group at once or expand the group and act on the individual notifications in the group. The process includes three steps. In step 1, awesome individual notifications are made; in step 2, the notifications are bundled, in which similar notifications like chat messages or email for a particular account are grouped; in step 3, a summary notification is built, in which only the summary notifications will be displayed. US2015215258A1 discloses a notification management. Computer-implemented methods for providing a single notification for display in an application from multiple received notifications are provided. In one aspect, a method includes receiving a first notification for an application and receiving a second notification for the application subsequent to the first notification, and analyzing content of the first notification and content of the second notification. The method also includes determining, based on the analysis, whether the second notification is related to the first notification, and providing, for display, a single notification includes at least a portion of the content of the first notification and at least a portion of the content of the second notification when the second notification is related to the first notification

### SUMMARY

This Summary is provided to introduce a selection of aspects of the present disclosure in a simplified form that are further described below in the Detailed Description. This Summary is not intended to identify key features or essential features of the claimed subject matter, nor is it intended to be used to limit the scope of the claimed subject matter.

The invention is as defined by independent claims 1, 7 and 11. Particular embodiments of the invention are present in the dependent claims.

Aspects of the disclosure provide a method for displaying a notification message. The method includes receiving a first notification message pushed by an application; detecting that a second notification message exists among at least one notification message loaded in a notification bar, wherein the second notification message includes content that is similar to that of the first notification message; folding the first notification message and the second notification message into a folded notification message; and displaying the folded notification message in the notification bar.

The method also includes determining a type of the application; and when the type of the application is included in a preset type set, detecting whether the second notification message exists among the at least one notification message loaded in the notification bar, wherein the preset type set is configured to store the type of the application pushing notification messages that are to be folded and displayed in the notification bar.

The method also includes determining a developer of the application; and when the developer belongs to a preset developer set, detecting whether the second notification message exists among the at least one notification message loaded in the notification bar, wherein the preset developer set is configured to store the developer of the application, pushing notification messages which are to be folded and displayed in the notification bar.

When detecting that the second notification message exists among the at least one notification message loaded in the notification bar, the method includes determining key information of the first notification message and key information of the at least one notification message loaded in the notification bar, wherein the key information of the first notification message is extracted from a title or a content of the first notification message and the key information of the at least one notification message loaded in the notification bar is extracted from a title or a content of the at least one notification message; determining a similarity between the first notification message and each of the at least one notification message loaded in the notification bar based on the key information of the first notification message and the key information of the at least one notification message loaded in the notification bar; and when the similarity between a notification message of the at least one notification message and the first notification message is greater than a preset similarity, determining the notification message of the at least one notification message with a greater similarity to the first notification message than the preset similarity as the second notification message.

When detecting that the second notification message exists among the at least one notification message loaded in the notification bar, the method includes determining a number of identical characters in a title of each of the at least one notification message loaded in the notification bar and in a title of the first notification message; and when a ratio of the number of the identical characters to a total number of characters in the title of the first notification message is greater than a preset ratio, determining that the at least one notification message loaded in the notification bar includes the second notification message.

The method also includes determining whether the second notification message exists in a predetermined message list, wherein the predetermined message list is configured to store notification messages received in a time period before a current time; and when the second notification message exists in the predetermined message list, detecting that the second notification message exists among the at least one notification message loaded in the notification bar.

The method also includes receiving a command configured to unfold the folded notification message in the notification bar is received; and displaying each one of the folded notification messages in an unfolded state.

The method also includes receiving a command configured to view a content of the folded notification message in the notification bar is received; and displaying a target notification message by starting an application pushing the target notification message, wherein the target notification message is an earliest notification message loaded in the notification bar among the notification messages that are folded into the folded notification message.

Aspects of the disclosure also provide an apparatus for displaying a notification message. The apparatus includes: a receiving module, configured to receive a first notification message pushed by an application; a detecting module, configured to detect that a second notification message exists among at least one notification message loaded in a notification bar, wherein the second notification message includes content that is similar to that of the first notification message; a folding module, configured to fold the first notification message and the second notification message into a folded notification message, and display the folded notification message in the notification bar.

The apparatus also includes:
a first triggering module, configured to determine a type of the application, and detect whether the second notification message exists among the at least one notification message loaded in the notification bar when the type of the application is included in a preset type set, wherein the preset type set is configured to store the type of the application pushing notification messages that are to be folded and displayed in the notification bar;
   or,
a second triggering module, configured to determine a developer of the application, and detect whether the second notification message exists among the at least one notification message loaded in the notification bar when the developer belongs to a preset developer set, wherein the preset developer set is configured to store the developer of the application, pushing notification messages which are to be folded and displayed in the notification bar.

In an embodiment, the detecting module includes:
a first determining sub-module, configured to determine key information of the first notification message and key information of the at least one notification message loaded in the notification bar, wherein the key information of the first notification message is extracted from a title or a content of the first notification message and the key information of the at least one notification message loaded in the notification bar is extracted from a title or a content of the at least one notification message;
a second determining sub-module, configured to determine a similarity between the first notification message and each of the at least one notification message loaded in the notification bar based on the key information of the first notification message and the key information of the at least one notification message loaded in the notification bar; and
a third determining sub-module, configured to determine the notification message of the at least one notification message with a greater similarity to the first notification message than the preset similarity as the second notification message when the similarity between a notification message of the at least one notification message and the first notification message is greater than a preset similarity; and/or
the detecting module further includes:
   a fourth determining sub-module, configured to determine a number of identical characters in a title of each of the at least one notification message loaded in the notification bar and in a title of the first notification message; and
   a fifth determining sub-module, configured to determine that the at least one notification message loaded in the notification bar includes the second notification message when a ratio of the number of the identical characters to a total number of characters in the title of the first notification message is greater than a preset ratio.

The apparatus also includes at least one of:
a judging module, configured to determine whether the second notification message exists in a predetermined message list, wherein the predetermined message list is configured to store notification messages received in a time period before a current time; and
a third triggering module, configured to detect that the second notification message exists among the at least one notification message loaded in the notification bar when the second notification message exists in the predetermined message list.

The apparatus also includes at least one of:
a first displaying module, configured to receive a command configured to unfold the folded notification message in the notification bar, and display each one of the folded notification messages in an unfolded state; and
a second displaying module, configured to receive a command configured to view a content of the folded notification message in the notification bar, and display a target notification message by starting an application pushing the target notification message, wherein the target notification message is an earliest notification message loaded in the notification bar among the notification messages that are folded into the folded notification message.

Aspects of the disclosure also provide a device for displaying a notification message. The device includes a processor and a memory configured to store at least one instruction executable by the processor. The processor is configured to receive a first notification message pushed by an application; detect that a second notification message exists among at least one notification message loaded in a notification bar, wherein the second notification message includes content that is similar to that of the first notification message; fold the first notification message and the second notification message into a folded notification message; and display the folded notification message in the notification bar.

Aspects of the disclosure also provide a program product having stored therein instructions that, when executed by one or more processors of an apparatus, cause the apparatus to perform the method for displaying the notification message according to the above aspects of the disclosure.

It is to be understood that both the foregoing general description and the following detailed description are illustrative and explanatory only and are not restrictive of the present disclosure.

### BRIEF DESCRIPTION OF THE DRAWINGS

The accompanying drawings, which are incorporated in and constitute a part of this specification, illustrate aspects consistent with the present disclosure and, together with the description, serve to explain the principles of the present disclosure.
Fig. 1 is a flow chart of a method for displaying a notification message according to an exemplary aspect of the present disclosure.
Fig. 2 is a flow chart of a method for displaying a notification message according to another exemplary aspect of the present disclosure.
Fig. 3A is a block diagram of an apparatus for displaying a notification message according to an exemplary aspect of the present disclosure.
Fig. 3B is a block diagram of an apparatus for displaying a notification message according to another exemplary aspect of the present disclosure.
Fig. 3C is a block diagram of a detecting module 320 according to an exemplary aspect of the present disclosure.
Fig. 3D is a block diagram of a detecting module 320 according to another exemplary aspect of the present disclosure.
Fig. 3E is a block diagram of an apparatus for displaying a notification message according to yet another exemplary aspect of the present disclosure.
Fig. 3F is a block diagram of an apparatus for displaying a notification message according to still another exemplary aspect of the present disclosure.
Fig. 4 is a block diagram of a device 400 for displaying a notification message according to an exemplary aspect of the present disclosure.

The specific aspects of the present disclosure, which have been illustrated by the accompanying drawings described above, will be described in detail below. These accompanying drawings and description are not intended to limit the scope of the present disclosure in any manner, but to explain the concept of the present disclosure to those skilled in the art via referencing specific aspects.

### DETAILED DESCRIPTION

Reference will now be made in detail to exemplary aspects, examples of which are illustrated in the accompanying drawings. The following description refers to the accompanying drawings in which the same numbers in different drawings represent the same or similar elements unless otherwise represented. The implementations set forth in the following description of exemplary aspects do not represent all implementations consistent with the disclosure. Instead, they are merely examples of apparatuses and methods consistent with aspects related to the disclosure as recited in the appended claims.

An application scene of aspects of the present disclosure will be introduced before describing and illustrating the aspects of the present disclosure in detail. Methods provided by aspects of the present disclosure are applied to a scene of displaying a notification message pushed by an application. In an aspect, after a terminal receives the notification message pushed by the application, the notification message may be loaded and displayed in a notification bar. When several notification messages are received, these notification messages will be displayed in the notification bar in a certain order. However, different applications may push similar notification messages. For example, different news applications may push identical hot news. If these similar notification messages are all displayed in the notification bar, a displaying space of the notification bar may be occupied and the user may be disturbed. Therefore, in order to overcome such defects, aspects of the present disclosure provide a method and an apparatus for displaying a notification message.

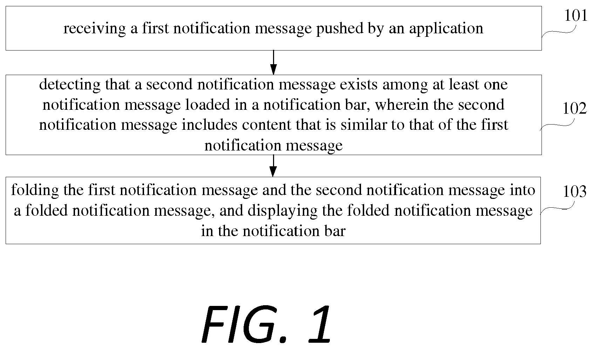

Fig. 1 is a flow chart of a method for displaying a notification message according to an example aspect. Referring to Fig. 1, the method is applied to a terminal and includes followings.

At block 101, a first notification message pushed by an application is received.

At block 102, it is detected whether a second notification message exists among at least one notification message loaded in a notification bar, in which the second notification message includes content that is similar to that of the first notification message.

At block 103, when the second notification message exists, the first notification message and the second notification message are folded into a folded notification message and the folded notification message is displayed in the notification bar.

In aspects of the present disclosure, when the first notification message pushed by an application is received, it may be detected whether a second notification message exists among at least one notification message loaded in a notification bar including content that is similar to that of the first notification message, if yes, the first notification message and the second notification message are folded into a folded notification message and the folded notification message is displayed in the notification bar. By folding and displaying similar notification messages in the notification bar, a displaying space of the notification bar may be saved, and a disturbance of the similar notification messages for the user may be avoided.

In an aspect, before detecting whether a second notification message exists among at least one notification message loaded in a notification bar, the method also includes followings. A type of the application is determined, and when the type of the application belongs to a preset type set, it is detected whether the second notification message exists among the at least one notification message loaded in the notification bar, in which the preset type set is configured to store the type of the application pushing notification messages which are to be folded and displayed in the notification bar. Alternatively, a developer of the application is determined, and when the developer belongs to a preset developer set, it is detected whether the second notification message exists among the at least one notification message loaded in the notification bar, in which the preset developer set is configured to store the developer of the application pushing notification messages which are to be folded and displayed in the notification bar.

In an aspect, detecting whether a second notification message exists among at least one notification message loaded in a notification bar may include followings. Key information of the first notification message and key information of the at least one notification message loaded in the notification bar are determined, in which the key information of the first notification message is extracted from a title or a content of the first notification message and the key information of the at least one notification message loaded in the notification bar is extracted from a title or a content of the at least one notification message. A similarity between the first notification message and each of the at least one notification message loaded in the notification bar is determined based on the key information of the first notification message and the key information of the at least one notification message loaded in the notification bar. When the similarity between a notification message of the at least one notification message and the first notification message is greater than a preset similarity, determining the notification message of the at least one notification message with a greater similarity to the first notification message than the preset similarity as the second notification message.

In an aspect, detecting whether a second notification message exists among at least one notification message loaded in a notification bar may include followings. A number of identical characters in a title of each of the at least one notification message loaded in the notification bar and in a title of the first notification message is determined. When a ratio of the number of the identical characters to a total number of characters in the title of the first notification message is greater than a preset ratio, it is determined that the at least one notification message loaded in the notification bar includes the second notification message.

In an aspect, before detecting whether a second notification message exists among at least one notification message loaded in a notification bar, the method also includes followings. It is judged whether the second notification message exists in a predetermined message list, in which the predetermined message list is configured to store notification messages received in a time period before a current time. When the second notification message exists in the predetermined message list, it is detected whether the second notification message exists among the at least one notification message loaded in the notification bar.

In an aspect, after the first notification message and the second notification message are folded into a folded notification message and the folded notification message is displayed in the notification bar, the method also includes at least one of the followings. When a command configured to unfold the folded notification message in the notification bar is received, each one of the folded notification messages is displayed in an unfolded state. When a command configured to view a content of the folded notification message in the notification bar is received, a target notification message is displayed by starting an application pushing the target notification message, in which the target notification message is an earliest notification message loaded in the notification bar among the notification messages which are folded into the folded notification message.

The above-mentioned alternative technical solutions may be combined as alternative aspects of the present disclosure, which will not be described herein.

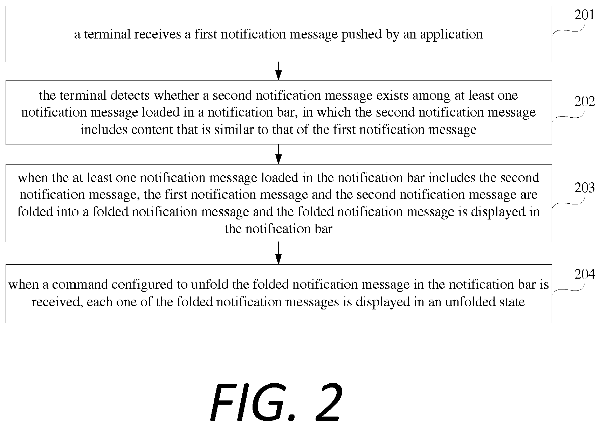

Fig. 2 is a flow chart of a method for displaying a notification message according to another example aspect. Referring to Fig. 2, the method is applied to a terminal and includes followings.

At block 201, a terminal receives a first notification message pushed by an application.

For example, the first notification message may be hot news pushed by a news application or a prompt message of upgrading an application pushed by an application store.

At block 202, the terminal detects whether a second notification message exists among at least one notification message loaded in a notification bar, in which the second notification message includes content that is similar to that of the first notification message.

In an aspect, after the first notification message is received, the terminal may load the first notification message in the notification bar in a conventional way. In other characters, the notification message and other notification messages in the notification bar may be displayed in a chronological order. However, in aspects of the present disclosure, after a certain first notification message is received, it may be detected whether a notification message including content that is similar to that of the first notification message exists among at least one notification message loaded in a notification bar, and process the first notification message according to the judging result.

It may be detected whether a second notification message exists among the at least one notification message loaded in a notification bar by character recognition technology. In a practical application, implementations for detecting whether a second notification message exists among the at least one notification message loaded in a notification bar may include any one of the followings.

In a first implementation, key information of the first notification message and key information of the at least one notification message loaded in the notification bar are determined, in which the key information of the first notification message is extracted from a title or a content of the first notification message and the key information of the at least one notification message loaded in the notification bar is extracted from a title or a content of the at least one notification message. A similarity between the first notification message and each of the at least one notification message loaded in the notification bar may be determined based on the key information of the first notification message and the key information of the at least one notification message loaded in the notification bar. When the similarity between a notification message of the at least one notification message and the first notification message is greater than a preset similarity, the notification message of the at least one notification message with a greater similarity to the first notification message than the preset similarity is determined as the second notification message.

The similarity of two notification messages is configured to indicate a similar level between the two notification messages. The higher the similarity is, the more similar the two notification messages are. The preset similarity is a minimum similarity capable of determining that the two notification messages are similar. The present similarity may be a default value set in the terminal, or may be set by a user, which will not limited in aspects of the present disclosure. For example, the preset similarity may be 0.6 or 0.8, etc.

If the similarity of a notification message in the notification bar and the first notification message is greater than the preset similarity, the notification message is the second notification message.

In a second implementation, regarding each of the at least one notification message loaded in the notification bar, a number of identical characters in a title of each of the at least one notification message loaded in the notification bar and in a title of the first notification message may be determined. When a ratio of the number of the identical characters to a total number of characters in the title of the first notification message is greater than a preset ratio, it may be determined that the at least one notification message loaded in the notification bar includes the second notification message.

The preset ratio refers to a lowest ratio determining that two notification messages are similar. The present ratio may be a default value set in the terminal, or may be set by a user, which will not limited in aspects of the present disclosure. For example, the preset ratio may be 60% or 80%, etc.

If the ratio of the number of the identical characters in a notification message loaded in the notification bar and in a title of the first notification message to a total number of characters in the title of the first notification message is greater than the preset ratio, the notification message is the second notification message.

It should be noted that, the above-mentioned implementations are merely exemplary aspects for detecting whether the second notification message exists among the at least one notification message loaded in the notification bar. However, in a practical application, other implementation manners may be used to detect whether the second notification message exists among the at least one notification message loaded in the notification bar, which will not be limited to the aspects of the present disclosure.

At block 203, when the at least one notification message loaded in the notification bar includes the second notification message, the first notification message and the second notification message are folded into a folded notification message and the folded notification message is displayed in the notification bar.

Implementations for folding the first notification message and the second notification message may include any one of the followings.

In a first implementation, the first notification message and the second notification message may be folded in sequence as a folded notification message.

For example, the first notification message and the second notification message may be folded in a chronological order. As an example, the earliest notification message in the first notification message and the second notification message may be displayed on a top of the folded notification message, and other notification messages may be folded under the top notification message in a chronological order, such that the latest notification message may be displayed on a bottom of the folded notification message. After that, when a notification message including content that is similar to that of the folded notification message is received, the notification message may be placed on the bottom of the folded notification message.

In a second implementation, the first notification message and the second notification message may be folded into a notification folder, in which the notification folder includes the first notification message and the second notification message.

A displaying icon of the notification folder may be any of the notification messages which are to be folded or may be a default icon, and the notification folder may be set with a title, the title of the notification folder may be a title or keywords of any of the notification messages which are to be folded.

After that, when a notification message including content that is similar to that of any of the notification messages included in the notification folder is received, the notification message may be added to the notification folder.

It should be noted that, the above-mentioned implementations are merely exemplary aspects for folding the first notification message and the second notification message. However, in a practical application, other implementation manners may be used to fold the first notification message and the second notification message, which will not be limited to the aspects of the present disclosure.

By folding similar notification messages for display, a displaying space of the notification bar may be saved, and a disturbance of displaying a plurality of similar notification messages to the user may be avoided, thereby improving user's experience.

Further, in aspects of the present disclosure, applications pushing notification messages may be set in advance. In other words, it may be set that the notification messages pushed by which applications may be folded for display. Accordingly, before detecting whether the second notification message exists among the at least one notification message loaded in the notification bar, the method also includes any one of followings.

In a first implementation, a type of the application may be determined, and when the type of the application belongs to a preset type set, it may be detected whether the second notification message exists among the at least one notification message loaded in the notification bar, in which the preset type set is configured to store the type of the application pushing notification messages which are to be folded and displayed in the notification bar.

In other words, the terminal may preset the type of the application pushing notification messages which are to be folded and displayed in the notification bar, and store the type of the application in a preset type set. The preset type set may be a default set in the terminal, or may be set by a user, which will not limited in aspects of the present disclosure.

For example, a preset type of the application may be a news type, an application store type and the like. As an example, when the preset type of the application is the news type, after the terminal receives the first notification message pushed by a certain application, the type of the application may be determined firstly, and when the type of the application belongs to the news type, it may be detected whether the second notification message exists among the at least one notification message loaded in the notification bar; when the type of the application does not belong to the news type, the first notification message may be loaded in the notification bar directly.

In a second implementation, a developer of the application may be determined, and when the developer belongs to a preset developer set, it may be detected whether the second notification message exists among the at least one notification message loaded in the notification bar, in which the preset developer set is configured to store the developer of the application pushing notification messages which are to be folded and displayed in the notification bar.

In other words, the terminal may preset the developer of the application pushing notification messages which are to be folded and displayed in the notification bar, and store the developer of the application in a preset developer set. The preset developer set may be a default set in the terminal, or may be set by a user, which will not limited in aspects of the present disclosure.

For example, a preset developer of the application may be A company, and after the terminal receives the first notification message pushed by a certain application, the developer of the application may be determined firstly, and when the developer of the application belongs to the A company, it may be detected whether the second notification message exists among the at least one notification message loaded in the notification bar; when the developer of the application does not belong to the A company, the first notification message may be loaded in the notification bar directly.

Furthermore, in an aspect, after the terminal receives a notification message pushed by the application and loads the notification message in the notification bar, the terminal may display a prompt message for prompting the user that the notification message is received. The prompt message may be displayed in a message prompt box, a prompt light and the like. For example, the terminal may pop up the message prompt box on a current interface, in which the message prompt box includes a currently received notification message. Alternatively, the terminal may lighten the prompt light to prompt the user that the notification message is received.

After the notification message in the notification bar is viewed, the viewed notification message may be deleted from the notification bar. However, if a similar notification message is received afterwards, the prompt message may be displayed again, and this frequent prompt of the similar notification messages may also disturb the user. Considering this, in order to avoid a disturbance of similar notification messages effectively, the terminal may store a predetermined message list, in which the predetermined message list is configured to store notification messages received in a preset time period before a current time, and the terminal may determine the similar notification message according to the predetermined message list.

The present time period may be a default time period set in the terminal, or may be set by a user, which will not limited in aspects of the present disclosure. For example, the preset time period may be one hour or two hours, etc.

In an aspect, after the first notification message is received, it may be judged whether the second notification message exists in the predetermined message list. When the second notification message exists in the predetermined message list, it may be detected whether the second notification message exists among the at least one notification message loaded in the notification bar.

Further, when the second notification message does not exist in the predetermined message list, the first notification message may be loaded in the notification bar normally, and the prompt message may be displayed, in which the prompt message is configured to prompt the user that the first notification message is received. When the second notification message exists in the predetermined message list and in the notification bar, the first notification message and the second notification message may be folded into a folded notification message and the folded notification message may be displayed in the notification bar, and no prompt message will displayed. When the second notification message exists in the predetermined message list but not in the notification bar, the first notification message may be loaded in the notification bar normally, and no prompt message will be displayed.

Loading the first notification message in the notification bar normally means that the first notification message is displayed in the notification bar with other notification messages in a certain order, rather than folding the first notification message with other notification messages.

Implementations for judging whether the second notification message exists in the predetermined message list includes content that is similar to that of the implementations for detecting whether the second notification message exists among at least one notification message loaded in a notification bar, the detailed implementing process may refer to the above description, which will not be described herein.

Further, different predetermined message lists may be set with respect to different types of applications. Each of the predetermined message lists is configured to store notification messages received by the corresponding application in a time period before a current time. For example, different predetermined message lists may be set with respect to different types or developers of applications. When the first notification message is received afterwards, the predetermined message list corresponding to the application pushing the first notification message may be determined, and it may be judged whether the second notification message including content that is similar to that of the first notification message exists in the predetermined message list.

According to above implementations, in a case without prompting the user, a received notification message including content that is similar to that of a viewed notification message in the notification bar may be loaded in the notification bar directly, thereby reducing disturbance of invalid information for the user and improving user's experience. For example, regarding a viewed news notification message, when the application pushes an identical or similar news notification message again, the terminal may load it in the notification bar directly without disturbing the user.

At block 204, when a command configured to unfold the folded notification message in the notification bar is received, each one of the folded notification messages is displayed in an unfolded state.

After the similar notification messages are folded in the notification bar, when a command configured to unfold the folded notification message in the notification bar is received, each of the notification messages which are folded into the folded notification message is displayed to the user for view.

This command may be triggered by the user, and the user may trigger the command by a predetermined operation. The predetermined operation may be a click operation, a slide operation, a voice operation and the like, which are not limited in the aspects of the present disclosure.

For example, a drop-down button may be displayed at a location of the folded notification message. The drop-down button is configured to trigger the command to unfold the folded notification message. The location of the folded notification message may be in front of or behind the folded notification message, which is not limited in aspects of the present disclosure. When the user wants to view all notification messages which are folded in the folded notification message, the user may trigger the command to unfold the folded notification message by clicking the drop-down button. When the terminal receives the command configured to unfold the folded notification message, all notification messages which are folded in the folded notification message may be displayed.

In another aspect, when a command configured to unfold the folded notification message in the notification bar is received, the terminal may display identifications of the applications corresponding to all notification messages which are folded in the folded notification message. The user may trigger the command by a predetermined operation.

In another aspect, when a command configured to view a content of the folded notification message in the notification bar is received, the terminal may display a target notification message by starting an application pushing the target notification message, in which the target notification message is an earliest notification message loaded in the notification bar among the notification messages which are folded into the folded notification message.

In other words, when a command configured to view a content of the folded notification message in the notification bar is received, the terminal may start the application pushing the target notification message, and display the target notification message in the application for the user to view.

The command configured to view a content of the folded notification message may be triggered by the user via a predetermined operation. For example, the user may click the folded notification message to trigger the command to view a content of the folded notification message.

In aspects of the present disclosure, when a first notification message pushed by an application is received, it may be detected whether a second notification message including content that is similar to that of the first notification message exists among at least one notification message loaded in a notification bar, if yes, the first notification message and the second notification message are folded into a folded notification message and the folded notification message is displayed in the notification bar. By folding and displaying similar notification messages in the notification bar, a displaying space of the notification bar may be saved, and a disturbance of the similar notification messages for the user may be avoided.

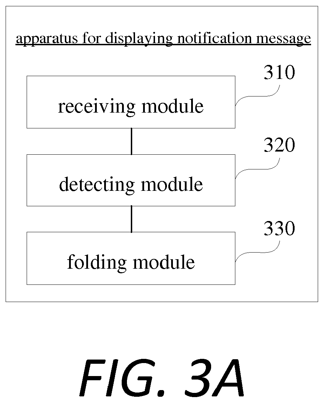

Fig. 3A is a block diagram of an apparatus for displaying a notification message according to an example aspect. Referring to Fig. 3A, the apparatus may include a receiving module 310, configured to receive a first notification message pushed by an application; a detecting module 320, configured to detect whether a second notification message exists among at least one notification message loaded in a notification bar, in which the second notification message includes content that is similar to that of the first notification message; and a folding module 330, configured to fold the first notification message and the second notification message as a folded notification message and to display the folded notification message in the notification bar when the at least one notification message loaded in the notification bar includes the second notification message.

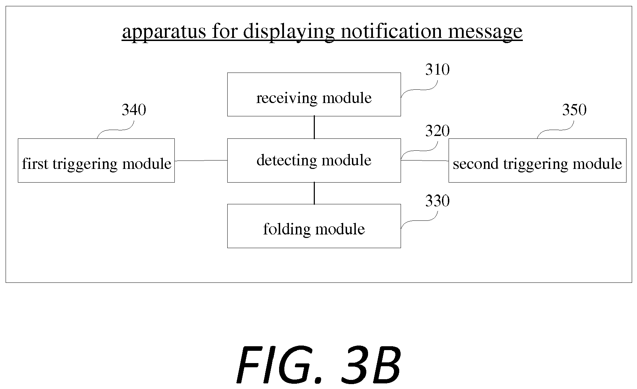

In an aspect, referring to Fig. 3B, the apparatus also includes: a first triggering module 340, configured to determine a type of the application, and to trigger the detecting module to detect whether the second notification message exists among the at least one notification message loaded in the notification bar when the type of the application belongs to a preset type set, in which the preset type set is configured to store the type of the application pushing notification messages which are to be folded and displayed in the notification bar; or a second triggering module 350, configured to determine a developer of the application, and to trigger the detecting module to detect whether the second notification message exists among the at least one notification message loaded in the notification bar when the developer belongs to a preset developer set, in which the preset developer set is configured to store the developer of the application pushing notification messages which are to be folded and displayed in the notification bar.

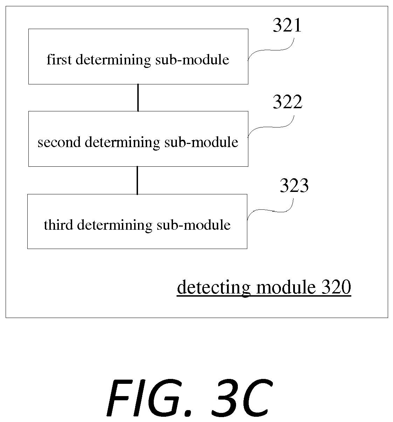

In an aspect, referring to Fig. 3C, the detecting module 320 may include: a first determining sub-module 321, configured to determine key information of the first notification message and key information of the at least one notification message loaded in the notification bar, in which the key information of the first notification message is extracted from a title or a content of the first notification message and the key information of the at least one notification message loaded in the notification bar is extracted from a title or a content of the at least one notification message; a second determining sub-module 322, configured to determine a similarity between the first notification message and each of the at least one notification message loaded in the notification bar based on the key information of the first notification message and the key information of the at least one notification message loaded in the notification bar; and a third determining sub-module 323, configured to determine a notification message of the at least one notification message with a greater similarity to the first notification message than the preset similarity as the second notification message when the similarity between the notification message of the at least one notification message and the first notification message is greater than a preset similarity.

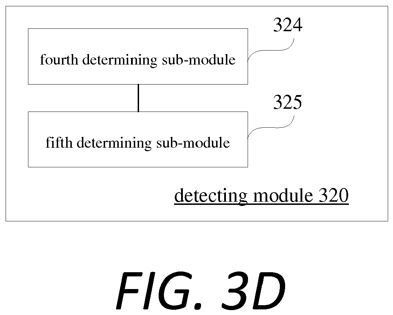

In an aspect, referring to Fig. 3D, the detecting module 320 may include: a fourth determining sub-module 324, configured to determine a number of identical characters in a title of each of the at least one notification message loaded in the notification bar and in a title of the first notification message; and a fifth determining sub-module 325, configured to determine that the at least one notification message loaded in the notification bar includes the second notification message when a ratio of the number of identical characters to a total number of characters in the title of the first notification message is greater than a preset ratio.

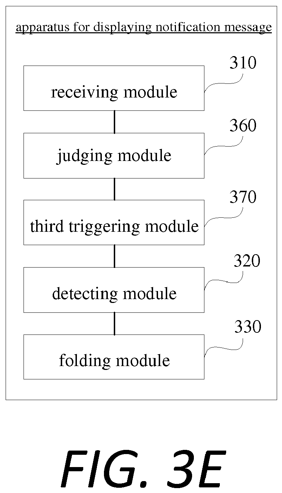

In an aspect, referring to Fig. 3E, the apparatus also includes: a judging module 360, configured to judge whether the second notification message exists in an predetermined message list, in which the predetermined message list is configured to store notification messages received in a time period before a current time; and a third triggering module 370, configured to trigger the detecting module to detect whether the second notification message exists among the at least one notification message loaded in the notification bar when the second notification message exists in the predetermined message list.

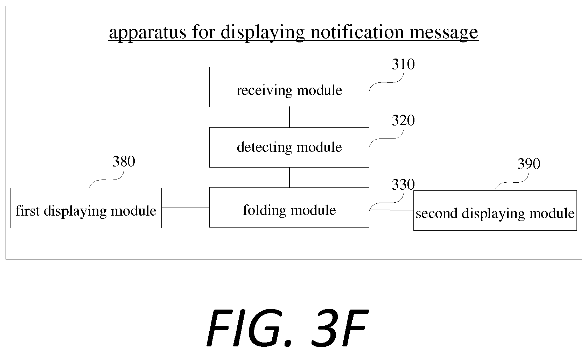

In an aspect, referring to Fig. 3F, the apparatus also includes at least one of: a first displaying module 380, configured to display each one of the folded notification messages in an unfolded state when a command configured to unfold the folded notification message in the notification bar is received; and a second displaying module 390, configured to display a target notification message by starting an application pushing the target notification message when a command configured to view a content of the folded notification message in the notification bar is received, in which the target notification message is an earliest notification message loaded in the notification bar among the notification messages which are folded into the folded notification message.

In aspects of the present disclosure, when a first notification message pushed by an application is received, it may be detected whether a second notification message including content that is similar to that of the first notification message exists among at least one notification message loaded in a notification bar, if yes, the first notification message and the second notification message are folded into a folded notification message and the folded notification message is displayed in the notification bar. By folding and displaying similar notification messages in the notification bar, a displaying space of the notification bar may be saved, and a disturbance of the similar notification messages for the user may be avoided.

Regarding the apparatus described in the above aspects, implementations for operating respective modules are described in detail in the method aspects of the present disclosure, which will not be described in detail herein.

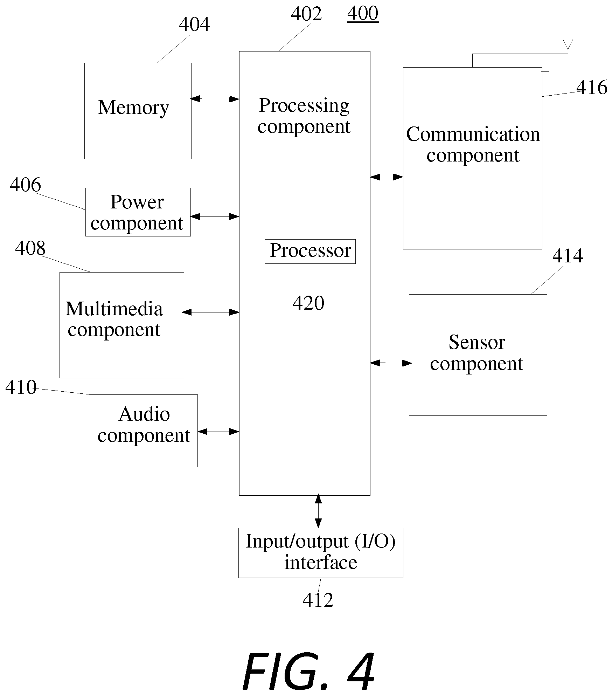

Fig. 4 is a block diagram of a device 400 for displaying a notification message according to an example aspect. For example, the apparatus 400 may be a mobile phone, a computer, a digital broadcasting terminal, a message sending and receiving equipment, a game controller, a tablet device, a medical device, a fitness equipment, a personal digital assistant or the like.

Referring to Fig. 4, the apparatus 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the apparatus 400, such as the operations associated with display, telephone calls, data communications, camera operations, and recording operations. The processing component 402 may include one or more processors 420 to execute instructions to perform all or part of the steps in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the apparatus 400. Examples of such data include instructions for any applications or methods operated on the apparatus 400, contact data, phonebook data, messages, pictures, video, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the apparatus 400. The power component 406 may include a power management system, one or more power sources, and any other components associated with the generation, management, and distribution of power in the apparatus 400.

The multimedia component 408 includes a screen providing an output interface between the apparatus 400 and the user. In some aspects, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some aspects, the multimedia component 408 includes a front camera and/or a rear camera. The front camera and the rear camera may receive an external multimedia datum while the apparatus 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone ("MIC") configured to receive an external audio signal when the apparatus 400 is in an operation mode, such as a call mode, a recording mode, and a voice recognition mode. The received audio signal may be further stored in the memory 404 or transmitted via the communication component 416. In some aspects, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the apparatus 400. For instance, the sensor component 414 may detect an open/closed status of the apparatus 400, relative positioning of components, e.g., the display and the keypad, of the apparatus 400, a change in position of the apparatus 400 or a component of the apparatus 400, a presence or absence of user contact with the apparatus 400, an orientation or an acceleration/deceleration of the apparatus 400, and a change in temperature of the apparatus 400. The sensor component 414 may include a proximity sensor configured to detect the presence of nearby objects without any physical contact. The sensor component 414 may also include a light sensor, such as a CMOS or CCD image sensor, for use in imaging applications. In some aspects, the sensor component 414 may also include an accelerometer sensor, a gyroscope sensor, a magnetic sensor, a pressure sensor, or a temperature sensor.

The communication component 416 is configured to facilitate communication, wired or wirelessly, between the apparatus 400 and other devices. The apparatus 400 can access a wireless network based on a communication standard, such as WiFi, 2G, or 3G, or a combination thereof. In one exemplary aspect, the communication component 416 receives a broadcast signal or broadcast associated information from an external broadcast management system via a broadcast channel. In one exemplary aspect, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary aspects, the apparatus 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary aspects, there is also provided a non-transitory computer-readable storage medium including instructions, such as included in the memory 404, executable by the processor 420 in the apparatus 400, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium has stored therein instructions that, when executed by a processor of the device 400, causes the device 400 to perform a method for displaying a notification message, the method includes: receiving a first notification message pushed by an application; detecting whether a second notification message exists among at least one notification message loaded in a notification bar, in which the second notification message includes content that is similar to that of the first notification message; and when the at least one notification message loaded in the notification bar includes the second notification message, folding the first notification message and the second notification message as a folded notification message and displaying the folded notification message in the notification bar.

In an aspect, the method also includes: determining a type of the application, and when the type of the application belongs to a preset type set, detecting whether the second notification message exists among the at least one notification message loaded in the notification bar, in which the preset type set is configured to store the type of the application pushing notification messages which are to be folded and displayed in the notification bar; or determining a developer of the application, and when the developer belongs to a preset developer set, detecting whether the second notification message exists among the at least one notification message loaded in the notification bar, in which the preset developer set is configured to store the developer of the application pushing notification messages which are to be folded and displayed in the notification bar.

In an aspect, the step of detecting whether a second notification message exists among at least one notification message loaded in a notification bar includes: determining key information of the first notification message and key information of the at least one notification message loaded in the notification bar, in which the key information of the first notification message is extracted from a title or a content of the first notification message and the key information of the at least one notification message loaded in the notification bar is extracted from a title or a content of the at least one notification message; determining a similarity between the first notification message and each of the at least one notification message loaded in the notification bar based on the key information of the first notification message and the key information of the at least one notification message loaded in the notification bar; and when the similarity between a notification message of the at least one notification message and the first notification message is greater than a preset similarity, determining the notification message of the at least one notification message with a greater similarity to the first notification message than the preset similarity as the second notification message.

In an aspect, the step of detecting whether a second notification message exists among at least one notification message loaded in a notification bar includes: determining a number of identical characters in a title of each of the at least one notification message loaded in the notification bar and in a title of the first notification message; and when a ratio of the number of the identical characters to a total number of characters in the title of the first notification message is greater than a preset ratio, determining that the at least one notification message loaded in the notification bar includes the second notification message.

In an aspect, the method also includes: judging whether the second notification message exists in an predetermined message list, in which the predetermined message list is configured to store notification messages received in a time period before a current time; and when the second notification message exists in the predetermined message list, detecting whether the second notification message exists among the at least one notification message loaded in the notification bar.

In an aspect, after the step of folding the first notification message and the second notification message as a folded notification message and displaying the folded notification message in the notification bar, the method also includes at least one of: when a command configured to unfold the folded notification message in the notification bar is received, displaying each one of the folded notification messages in an unfolded state; and when a command configured to view a content of the folded notification message in the notification bar is received, displaying a target notification message by starting an application pushing the target notification message, in which the target notification message is an earliest notification message loaded in the notification bar among the notification messages which are folded into the folded notification message.

In aspects of the present disclosure, when the first notification message pushed by an application is received, the device may detect whether a second notification message including content that is similar to that of the first notification message exists among at least one notification message loaded in a notification bar, if yes, the first notification message and the second notification message are folded into a folded notification message and the folded notification message is displayed in the notification bar. By folding and displaying similar notification messages in the notification bar, a displaying space of the notification bar may be saved, and a disturbance of the similar notification messages for the user may be avoided.

It is noted that the various modules, sub-modules, units, and components in the present disclosure can be implemented using any suitable technology. For example, a module may be implemented using circuitry, such as an integrated circuit (IC). As another example, a module may be implemented as a processing circuit executing software instructions.

Other aspects of the present disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

## Claims

1. A method for displaying a notification message, comprising:
receiving (101) a first notification message pushed by an application;
detecting (102) that a second notification message exists among at least one notification message loaded in a notification bar, wherein the second notification message includes content that is similar to that of the first notification message;
folding (103) the first notification message and the second notification message into a folded notification message; and
displaying the folded notification message in the notification bar;
wherein the method further comprises:
determining whether the second notification message exists in a predetermined message list, wherein the predetermined message list is configured to store notification messages received in a time period before a current time, in which
when the second notification message exists in the predetermined message list and in the notification bar, the first notification message and the second notification message are folded into the folded notification message and the folded notification message is displayed in the notification bar, and no prompt message is displayed; and
when the second notification message exists in the predetermined message list but not in the notification bar, the first notification message is displayed in the notification bar with the at least one notification message in a predetermined order, and no prompt message is displayed.

2. The method according to claim 1, further comprising:
determining a type of the application; and
when the type of the application is included in a preset type set, detecting whether the second notification message exists among the at least one notification message loaded in the notification bar, wherein the preset type set is configured to store the type of the application pushing notification messages that are to be folded and displayed in the notification bar.

3. The method according to claim 1, further comprising:
determining a developer of the application; and
when the developer belongs to a preset developer set, detecting whether the second notification message exists among the at least one notification message loaded in the notification bar, wherein the preset developer set is configured to store the developer of the application, pushing notification messages which are to be folded and displayed in the notification bar.

4. The method according to any one of claims 1 to 3, wherein detecting that the second notification message exists among the at least one notification message loaded in the notification bar includes:
determining key information of the first notification message and key information of the at least one notification message loaded in the notification bar, wherein the key information of the first notification message is extracted from a title or a content of the first notification message and the key information of the at least one notification message loaded in the notification bar is extracted from a title or a content of the at least one notification message;
determining a similarity between the first notification message and each of the at least one notification message loaded in the notification bar based on the key information of the first notification message and the key information of the at least one notification message loaded in the notification bar; and
when the similarity between a notification message of the at least one notification message and the first notification message is greater than a preset similarity, determining the notification message of the at least one notification message with a greater similarity to the first notification message than the preset similarity as the second notification message; and/or
wherein detecting that the second notification message exists among the at least one notification message loaded in the notification bar includes:
determining a number of identical characters in a title of each of the at least one notification message loaded in the notification bar and in a title of the first notification message; and
when a ratio of the number of the identical characters to a total number of characters in the title of the first notification message is greater than a preset ratio, determining that the at least one notification message loaded in the notification bar includes the second notification message.

5. The method according to any one of the preceding claims, further comprising:
receiving a command configured to unfold the folded notification message in the notification bar; and
displaying each one of the folded notification messages in an unfolded state.

6. The method according to any one of the preceding claims, further comprising:
receiving a command configured to view a content of the folded notification message in the notification bar; and
displaying a target notification message by starting an application pushing the target notification message, wherein the target notification message is an earliest notification message loaded in the notification bar among the notification messages that are folded into the folded notification message.

7. An apparatus for displaying a notification message, comprising:
a receiving module (310), configured to receive a first notification message pushed by an application;
a detecting module (320), configured to detect that a second notification message exists among at least one notification message loaded in a notification bar, wherein the second notification message includes content that is similar to that of the first notification message;
a folding module (330), configured to fold the first notification message and the second notification message into a folded notification message, and display the folded notification message in the notification bar; and
a judging module (360), configured to determine whether the second notification message exists in a predetermined message list, wherein the predetermined message list is configured to store notification messages received in a time period before a current time, in which
when the second notification message exists in the predetermined message list and in the notification bar, the first notification message and the second notification message are folded into the folded notification message and the folded notification message is displayed in the notification bar, and no prompt message is displayed; and
when the second notification message exists in the predetermined message list but not in the notification bar, the first notification message is displayed in the notification bar with the at least one notification message in a predetermined order, and no prompt message is displayed.

8. The apparatus according to claim 7, further comprising:
a first triggering module (340), configured to determine a type of the application, and detect whether the second notification message exists among the at least one notification message loaded in the notification bar when the type of the application is included in a preset type set, wherein the preset type set is configured to store the type of the application pushing notification messages that are to be folded and displayed in the notification bar;
or,
a second triggering module (350), configured to determine a developer of the application, and detect whether the second notification message exists among the at least one notification message loaded in the notification bar when the developer belongs to a preset developer set, wherein the preset developer set is configured to store the developer of the application, pushing notification messages which are to be folded and displayed in the notification bar.

9. The apparatus according to claim 7 or 8, wherein the detecting module (320) comprises:
a first determining sub-module (321), configured to determine key information of the first notification message and key information of the at least one notification message loaded in the notification bar, wherein the key information of the first notification message is extracted from a title or a content of the first notification message and the key information of the at least one notification message loaded in the notification bar is extracted from a title or a content of the at least one notification message;
a second determining sub-module (322), configured to determine a similarity between the first notification message and each of the at least one notification message loaded in the notification bar based on the key information of the first notification message and the key information of the at least one notification message loaded in the notification bar; and
a third determining sub-module (323), configured to determine the notification message of the at least one notification message with a greater similarity to the first notification message than the preset similarity as the second notification message when the similarity between a notification message of the at least one notification message and the first notification message is greater than a preset similarity; and/or
wherein the detecting module (320) further comprises:
a fourth determining sub-module (324), configured to determine a number of identical characters in a title of each of the at least one notification message loaded in the notification bar and in a title of the first notification message; and
a fifth determining sub-module (325), configured to determine that the at least one notification message loaded in the notification bar includes the second notification message when a ratio of the number of the identical characters to a total number of characters in the title of the first notification message is greater than a preset ratio.

10. The apparatus according to any one of claims 7 to 9, further comprising at least one of:
a first displaying module (380), configured to receive a command configured to unfold the folded notification message in the notification bar, and display each one of the folded notification messages in an unfolded state; and
a second displaying module (390), configured to receive a command configured to view a content of the folded notification message in the notification bar, and display a target notification message by starting an application pushing the target notification message, wherein the target notification message is an earliest notification message loaded in the notification bar among the notification messages that are folded into the folded notification message.

11. A device for displaying a notification message, comprising:
a processor (420);
a memory (404) configured to store at least one instruction executable by the processor (420);
wherein the processor (420) is configured to:
receive (101) a first notification message pushed by an application;
detect (102) that a second notification message exists among at least one notification message loaded in a notification bar, wherein the second notification message includes content that is similar to that of the first notification message;
fold (103) the first notification message and the second notification message into a folded notification message; and
display the folded notification message in the notification bar;
wherein the processor (420) is further configured to:
determine whether the second notification message exists in a predetermined message list, wherein the predetermined message list is configured to store notification messages received in a time period before a current time, in which
when the second notification message exists in the predetermined message list and in the notification bar, the first notification message and the second notification message are folded into the folded notification message and the folded notification message is displayed in the notification bar, and no prompt message is displayed; and
when the second notification message exists in the predetermined message list but not in the notification bar, the first notification message is displayed in the notification bar with the at least one notification message in a predetermined order, and no prompt message is displayed.

12. A program product having stored therein instructions that, when executed by one or more processors of an apparatus, cause the apparatus to perform a method for displaying a notification message according to any one of claims 1 to 6.

## Patentansprüche

1. Verfahren zum Anzeigen einer Benachrichtigungsmeldung, umfassend:
Empfangen (101) einer ersten Benachrichtigungsmeldung, die von einer Anwendung gepusht wird;
Erkennen (102), dass unter mindestens einer Benachrichtigungsmeldung, die in einer Benachrichtigungsleiste geladen ist, eine zweite Benachrichtigungsmeldung existiert, wobei die zweite Benachrichtigungsmeldung Inhalt einschließt, der demjenigen der ersten Benachrichtigungsmeldung ähnlich ist;
Falten (103) der ersten Benachrichtigungsmeldung und der zweiten Benachrichtigungsmeldung zu einer gefalteten Benachrichtigungsmeldung; und
Anzeigen der gefalteten Benachrichtigungsmeldung in der Benachrichtigungsleiste;
wobei das Verfahren weiter umfasst:
Bestimmen, ob die zweite Benachrichtigungsmeldung in einer vorbestimmten Meldungsliste existiert, wobei die vorbestimmte Meldungsliste dazu konfiguriert ist, Benachrichtigungsmeldungen zu speichern, die in einem Zeitraum vor einem aktuellen Zeitpunkt empfangen werden, wobei
wenn die zweite Benachrichtigungsmeldung in der vorbestimmten Meldungsliste und in der Benachrichtigungsleiste existiert, die erste Benachrichtigungsmeldung und die zweite Benachrichtigungsmeldung zu der gefalteten Benachrichtigungsmeldung gefaltet werden und die gefaltete Benachrichtigungsmeldung in der Benachrichtigungsleiste angezeigt wird, und keine Aufforderungsmeldung angezeigt wird; und
wenn die zweite Benachrichtigungsmeldung in der vorbestimmten Meldungsliste, aber nicht in der Benachrichtigungsleiste existiert, die erste Benachrichtigungsmeldung mit der mindestens einen Benachrichtigungsmeldung in einer vorbestimmten Reihenfolge in der Benachrichtigungsleiste angezeigt wird, und keine Aufforderungsmeldung angezeigt wird.

2. Verfahren nach Anspruch 1, weiter umfassend:
Bestimmen eines Typs der Anwendung; und
wenn der Typ der Anwendung in einem voreingestellten Typensatz eingeschlossen ist, Erkennen, ob die zweite Benachrichtigungsmeldung unter der mindestens einen in der Benachrichtigungsleiste geladenen Benachrichtigungsmeldung existiert, wobei der voreingestellte Typensatz dazu konfiguriert ist, den Typ der Anwendung zu speichern, die Benachrichtigungsmeldungen pusht, welche gefaltet und in der Benachrichtigungsleiste angezeigt werden sollen.

3. Verfahren nach Anspruch 1, weiter umfassend:
Bestimmen eines Entwicklers der Anwendung; und
wenn der Entwickler zu einem voreingestellten Entwicklersatz gehört, Erkennen, ob die zweite Benachrichtigungsmeldung unter der mindestens einen in der Benachrichtigungsleiste geladenen Benachrichtigungsmeldung existiert, wobei der voreingestellte Entwicklersatz dazu konfiguriert ist, den Entwickler der Anwendung zu speichern, die Benachrichtigungsmeldungen pusht, welche gefaltet und in der Benachrichtigungsleiste angezeigt werden sollen.

4. Verfahren nach einem der Ansprüche 1 bis 3, wobei das Erkennen, dass die zweite Benachrichtigungsmeldung unter der mindestens einen in der Benachrichtigungsleiste geladenen Benachrichtigungsmeldung existiert, einschließt:
Bestimmen von Schlüsselinformationen der ersten Benachrichtigungsmeldung und von Schlüsselinformationen der mindestens einen in der Benachrichtigungsleiste geladenen Benachrichtigungsmeldung, wobei die Schlüsselinformationen der ersten Benachrichtigungsmeldung aus einer Überschrift oder einem Inhalt der ersten Benachrichtigungsmeldung extrahiert werden und die Schlüsselinformationen der mindestens einen in der Benachrichtigungsleiste geladenen Benachrichtigungsmeldung aus einer Überschrift oder einem Inhalt der mindestens einen Benachrichtigungsmeldung extrahiert werden;
Bestimmen einer Ähnlichkeit zwischen der ersten Benachrichtigungsmeldung und jeder von der mindestens einen in der Benachrichtigungsleiste geladenen Benachrichtigungsmeldung auf Basis der Schlüsselinformationen der ersten Benachrichtigungsmeldung und der Schlüsselinformationen der mindestens einen in der Benachrichtigungsleiste geladenen Benachrichtigungsmeldung; und
wenn die Ähnlichkeit zwischen einer Benachrichtigungsmeldung von der mindestens einen Benachrichtigungsmeldung, und der ersten Benachrichtigungsmeldung größer ist als eine voreingestellte Ähnlichkeit, Bestimmen der Benachrichtigungsmeldung von der mindestens einen Benachrichtigungsmeldung mit einer größeren Ähnlichkeit zur ersten Benachrichtigungsmeldung als der voreingestellten Ähnlichkeit als die zweite Benachrichtigungsmeldung; und/oder
wobei das Erkennen, dass die zweite Benachrichtigungsmeldung unter der mindestens einen in der Benachrichtigungsleiste geladenen Benachrichtigungsmeldung existiert, einschließt:
Bestimmen einer Anzahl identischer Zeichen in einer Überschrift jeder von der mindestens einen in der Benachrichtigungsleiste geladenen Benachrichtigungsmeldung und in einer Überschrift der ersten Benachrichtigungsmeldung; und
wenn ein Verhältnis der Anzahl der identischen Zeichen zu einer Gesamtanzahl von Zeichen in der Überschrift der ersten Benachrichtigungsmeldung größer ist als ein voreingestelltes Verhältnis, Bestimmen, dass die mindestens eine in der Benachrichtigungsleiste geladene Benachrichtigungsmeldung die zweite Benachrichtigungsmeldung einschließt.

5. Verfahren nach einem der vorstehenden Ansprüche, weiter umfassend:
Empfangen eines Befehls, der dazu konfiguriert ist, die gefaltete Benachrichtigungsmeldung in der Benachrichtigungsleiste zu entfalten; und
Anzeigen jeder der gefalteten Benachrichtigungsmeldungen in einem entfalteten Zustand.

6. Verfahren nach einem der vorstehenden Ansprüche, weiter umfassend:
Empfangen eines Befehls, der dazu konfiguriert ist, einen Inhalt der gefalteten Benachrichtigungsmeldung in der Benachrichtigungsleiste zu sehen; und
Anzeigen einer Ziel-Benachrichtigungsmeldung durch Starten einer Anwendung, die die Ziel-Benachrichtigungsmeldung pusht, wobei die Ziel-Benachrichtigungsmeldung eine früheste in der Benachrichtigungsleiste geladene Benachrichtigungsmeldung unter den Benachrichtigungsmeldungen ist, die zu der gefalteten Benachrichtigungsmeldung gefaltet sind.

7. Einrichtung zum Anzeigen einer Benachrichtigungsmeldung, umfassend:
ein Empfangsmodul (310), das dazu konfiguriert ist, eine erste Benachrichtigungsmeldung, die von einer Anwendung gepusht wird, zu empfangen;
ein Erkennungsmodul (320), das dazu konfiguriert ist, zu erkennen, dass unter mindestens einer Benachrichtigungsmeldung, die in einer Benachrichtigungsleiste geladen ist, eine zweite Benachrichtigungsmeldung existiert, wobei die zweite Benachrichtigungsmeldung Inhalt einschließt, der demjenigen der ersten Benachrichtigungsmeldung ähnlich ist;
ein Faltmodul (330), das dazu konfiguriert ist, die erste Benachrichtigungsmeldung und die zweite Benachrichtigungsmeldung zu einer gefalteten Benachrichtigungsmeldung zu falten und die gefaltete Benachrichtigungsmeldung in der Benachrichtigungsleiste anzuzeigen; und
ein Beurteilungsmodul (360), das dazu konfiguriert ist, zu bestimmen, ob die zweite Benachrichtigungsmeldung in einer vorbestimmten Meldungsliste existiert, wobei die vorbestimmte Meldungsliste dazu konfiguriert ist, Benachrichtigungsmeldungen zu speichern, die in einem Zeitraum vor einem aktuellen Zeitpunkt empfangen werden, wobei
wenn die zweite Benachrichtigungsmeldung in der vorbestimmten Meldungsliste und in der Benachrichtigungsleiste existiert, die erste Benachrichtigungsmeldung und die zweite Benachrichtigungsmeldung zu der gefalteten Benachrichtigungsmeldung gefaltet werden und die gefaltete Benachrichtigungsmeldung in der Benachrichtigungsleiste angezeigt wird, und keine Aufforderungsmeldung angezeigt wird; und
wenn die zweite Benachrichtigungsmeldung in der vorbestimmten Meldungsliste, aber nicht in der Benachrichtigungsleiste existiert, die erste Benachrichtigungsmeldung mit der mindestens einen Benachrichtigungsmeldung in einer vorbestimmten Reihenfolge in der Benachrichtigungsleiste angezeigt wird, und keine Aufforderungsmeldung angezeigt wird.

8. Einrichtung nach Anspruch 7, weiter umfassend:
ein erstes Triggermodul (340), das dazu konfiguriert ist, einen Typ der Anwendung zu bestimmen, und zu erkennen, ob die zweite Benachrichtigungsmeldung unter der mindestens einen in der Benachrichtigungsleiste geladenen Benachrichtigungsmeldung existiert, wenn der Typ der Anwendung in einem voreingestellten Typensatz eingeschlossen ist, wobei der voreingestellte Typensatz dazu konfiguriert ist, den Typ der Anwendung zu speichern, die Benachrichtigungsmeldungen pusht, welche gefaltet und in der Benachrichtigungsleiste angezeigt werden sollen;
oder
ein zweites Triggermodul (350), das dazu konfiguriert ist, einen Entwickler der Anwendung zu bestimmen, und zu erkennen, ob die zweite Benachrichtigungsmeldung unter der mindestens einen in der Benachrichtigungsleiste geladenen Benachrichtigungsmeldung existiert, wenn der Entwickler zu einem voreingestellten Entwicklersatz gehört, wobei der voreingestellte Entwicklersatz dazu konfiguriert ist, den Entwickler der Anwendung zu speichern, die Benachrichtigungsmeldungen pusht, welche gefaltet und in der Benachrichtigungsleiste angezeigt werden sollen.

9. Einrichtung nach Anspruch 7 oder 8, wobei das Erkennungsmodul (320) umfasst:
ein erstes Bestimmungs-Submodul (321), das dazu konfiguriert ist, Schlüsselinformationen der ersten Benachrichtigungsmeldung und Schlüsselinformationen der mindestens einen in der Benachrichtigungsleiste geladenen Benachrichtigungsmeldung zu bestimmen, wobei die Schlüsselinformationen der ersten Benachrichtigungsmeldung aus einer Überschrift oder einem Inhalt der ersten Benachrichtigungsmeldung extrahiert werden und die Schlüsselinformationen der mindestens einen in der Benachrichtigungsleiste geladenen Benachrichtigungsmeldung aus einer Überschrift oder einem Inhalt der mindestens einen Benachrichtigungsmeldung extrahiert werden;
ein zweites Bestimmungs-Submodul (322), das dazu konfiguriert ist, eine Ähnlichkeit zwischen der ersten Benachrichtigungsmeldung und jeder von der mindestens einen in der Benachrichtigungsleiste geladenen Benachrichtigungsmeldung auf Basis der Schlüsselinformationen der ersten Benachrichtigungsmeldung und der Schlüsselinformationen der mindestens einen in der Benachrichtigungsleiste geladenen Benachrichtigungsmeldung zu bestimmen; und
ein drittes Bestimmungs-Submodul (323), das dazu konfiguriert ist, die Benachrichtigungsmeldung von der mindestens einen Benachrichtigungsmeldung mit einer größeren Ähnlichkeit zur ersten Benachrichtigungsmeldung als der voreingestellten Ähnlichkeit als die zweite Benachrichtigungsmeldung zu bestimmen, wenn die Ähnlichkeit zwischen einer Benachrichtigungsmeldung von der mindestens einen Benachrichtigungsmeldung und der ersten Benachrichtigungsmeldung größer ist als eine voreingestellte Ähnlichkeit; und/oder
wobei das Erkennungsmodul (320) weiter umfasst:
ein viertes Bestimmungs-Submodul (324), das dazu konfiguriert ist, eine Anzahl identischer Zeichen in einer Überschrift jeder von der mindestens einen in der Benachrichtigungsleiste geladenen Benachrichtigungsmeldung und in einer Überschrift der ersten Benachrichtigungsmeldung zu bestimmen; und
ein fünftes Bestimmungs-Submodul (325), das dazu konfiguriert ist, zu bestimmen, dass die mindestens eine in der Benachrichtigungsleiste geladene Benachrichtigungsmeldung die zweite Benachrichtigungsmeldung einschließt, wenn ein Verhältnis der Anzahl der identischen Zeichen zu einer Gesamtanzahl von Zeichen in der Überschrift der ersten Benachrichtigungsmeldung größer ist als ein voreingestelltes Verhältnis.

10. Einrichtung nach einem der Ansprüche 7 bis 9, weiter mindestens eines umfassend aus:
einem ersten Anzeigemodul (380), das dazu konfiguriert ist, einen Befehl zu empfangen, der dazu konfiguriert ist, die gefaltete Benachrichtigungsmeldung in der Benachrichtigungsleiste zu entfalten und jede der gefalteten Benachrichtigungsmeldungen in einem entfalteten Zustand anzuzeigen; und
einem zweiten Anzeigemodul (390), das dazu konfiguriert ist, einen Befehl zu empfangen, der dazu konfiguriert ist, einen Inhalt der gefalteten Benachrichtigungsmeldung in der Benachrichtigungsleiste zu sehen und eine Ziel-Benachrichtigungsmeldung durch Starten einer Anwendung, die die Ziel-Benachrichtigungsmeldung pusht, anzuzeigen, wobei die Ziel-Benachrichtigungsmeldung eine früheste in der Benachrichtigungsleiste geladene Benachrichtigungsmeldung unter den Benachrichtigungsmeldungen ist, die zu der gefalteten Benachrichtigungsmeldung gefaltet sind.

11. Vorrichtung zum Anzeigen einer Benachrichtigungsmeldung, umfassend:
einen Prozessor (420);
einen Speicher (404), der dazu konfiguriert ist, mindestens eine Anweisung zu speichern, die vom Prozessor (420) ausgeführt werden kann;
wobei der Prozessor (420) dazu konfiguriert ist:
eine erste Benachrichtigungsmeldung zu empfangen (101), die von einer Anwendung gepusht wird;
zu erkennen (102), dass unter mindestens einer Benachrichtigungsmeldung, die in einer Benachrichtigungsleiste geladen ist, eine zweite Benachrichtigungsmeldung existiert, wobei die zweite Benachrichtigungsmeldung Inhalt einschließt, der demjenigen der ersten Benachrichtigungsmeldung ähnlich ist;
die erste Benachrichtigungsmeldung und die zweite Benachrichtigungsmeldung zu einer gefalteten Benachrichtigungsmeldung zu falten (103); und
die gefaltete Benachrichtigungsmeldung in der Benachrichtigungsleiste anzuzeigen;
wobei der Prozessor (420) weiter dazu konfiguriert ist:
zu bestimmen, ob die zweite Benachrichtigungsmeldung in einer vorbestimmten Meldungsliste existiert, wobei die vorbestimmte Meldungsliste dazu konfiguriert ist, Benachrichtigungsmeldungen zu speichern, die in einem Zeitraum vor einem aktuellen Zeitpunkt empfangen werden, wobei
wenn die zweite Benachrichtigungsmeldung in der vorbestimmten Meldungsliste und in der Benachrichtigungsleiste existiert, die erste Benachrichtigungsmeldung und die zweite Benachrichtigungsmeldung zu der gefalteten Benachrichtigungsmeldung gefaltet werden und die gefaltete Benachrichtigungsmeldung in der Benachrichtigungsleiste angezeigt wird, und keine Aufforderungsmeldung angezeigt wird; und
wenn die zweite Benachrichtigungsmeldung in der vorbestimmten Meldungsliste, aber nicht in der Benachrichtigungsleiste existiert, die erste Benachrichtigungsmeldung mit der mindestens einen Benachrichtigungsmeldung in einer vorbestimmten Reihenfolge in der Benachrichtigungsleiste angezeigt wird, und keine Aufforderungsmeldung angezeigt wird.

12. Programmprodukt, das in demselben Anweisungen gespeichert aufweist, die, wenn sie von einem oder mehreren Prozessoren einer Einrichtung ausgeführt werden, die Einrichtung dazu bringen, ein Verfahren zum Anzeigen einer Benachrichtigungsmeldung nach einem der Ansprüche 1 bis 6 durchzuführen.

## Revendications

1. Procédé d'affichage d'un message de notification, comprenant les étapes consistant à :
recevoir (101) un premier message de notification poussé par une application ;
détecter (102) l'existence d'un second message de notification parmi au moins un message de notification chargé dans une barre de notification, dans lequel le second message de notification inclut un contenu qui est similaire à celui du premier message de notification ;
plier (103) le premier message de notification et le second message de notification en un message de notification plié ; et
afficher le message de notification plié dans la barre de notification ;
dans lequel le procédé comprend en outre les étapes consistant à :
déterminer si le second message de notification existe dans une liste de messages prédéterminée, dans lequel la liste de messages prédéterminée est configurée pour stocker des messages de notification reçus dans une période de temps antérieure à un instant actuel, dans lequel
lorsque le second message de notification existe dans la liste de messages prédéterminée et dans la barre de notification, le premier message de notification et le second message de notification sont pliés en le message de notification plié et le message de notification plié est affiché dans la barre de notification, et aucun message-guide n'est affiché ; et
lorsque le second message de notification existe dans la liste de messages prédéterminée mais pas dans la barre de notification, le premier message de notification est affiché dans la barre de notification avec le au moins un message de notification dans un ordre prédéterminé, et aucun message-guide n'est affiché.

2. Procédé selon la revendication 1, comprenant en outre les étapes consistant à :
déterminer un type de l'application ; et
lorsque le type de l'application est inclus dans un ensemble de types prédéfini, détecter si le second message de notification existe ou non parmi le message de notification chargé dans la barre de notification, dans lequel l'ensemble de types prédéfini est configuré pour stocker le type de l'application, poussant des messages de notification qui doivent être pliés et affichés dans la barre de notification.

3. Procédé selon la revendication 1, comprenant en outre les étapes consistant à :
déterminer un développeur de l'application ; et
lorsque le développeur appartient à un ensemble de développeurs prédéfini, détecter si le second message de notification existe ou non parmi le au moins un message de notification chargé dans la barre de notification, dans lequel l'ensemble de développeurs prédéfini est configuré pour stocker le développeur de l'application, des messages de notification devant être pliés et affichés dans la barre de notification.

4. Procédé selon l'une quelconque des revendications 1 à 3, dans lequel la détection de l'existence du second message de notification parmi le au moins un message de notification chargé dans la barre de notification inclut les étapes consistant à :
déterminer des informations clés du premier message de notification et des informations clés du au moins un message de notification chargé dans la barre de notification, dans lequel les informations clés du premier message de notification sont extraites d'un titre ou d'un contenu du premier message de notification et les informations clés du au moins un message de notification chargé dans la barre de notification sont extraites d'un titre ou d'un contenu du au moins un message de notification ;
déterminer une similitude entre le premier message de notification et chaque au moins un message de notification chargé dans la barre de notification sur la base des informations clés du premier message de notification et des informations clés du au moins un message de notification chargé dans la barre de notification ; et
lorsque la similitude entre un message de notification d'au moins un message de notification et le premier message de notification est supérieure à une similitude prédéfinie, déterminer le message de notification dudit au moins un message de notification avec une similitude par rapport au premier message de notification supérieure à la similitude prédéfinie en tant que second message de notification ; et/ou
dans lequel la détection de l'existence du second message de notification parmi le au moins un message de notification chargé dans la barre de notification inclut les étapes consistant à :
déterminer un nombre de caractères identiques dans un titre de chaque au moins un message de notification chargé dans la barre de notification et dans un titre du premier message de notification ; et
lorsqu'un rapport entre le nombre de caractères identiques et un nombre total de caractères dans le titre du premier message de notification est supérieur à un rapport prédéfini, déterminer que le au moins un message de notification chargé dans la barre de notification inclut le second message de notification.

5. Procédé selon l'une quelconque des revendications précédentes, comprenant en outre les étapes consistant à :
recevoir une instruction configurée pour déplier le message de notification plié dans la barre de notification ; et
afficher chacun des messages de notification pliés dans un état déplié.

6. Procédé selon l'une quelconque des revendications précédentes, comprenant en outre les étapes consistant à :
recevoir une instruction configurée pour afficher un contenu du message de notification plié dans la barre de notification ; et
afficher un message de notification cible en démarrant une application poussant le message de notification cible, dans lequel le message de notification cible est un message de notification le plus ancien chargé dans la barre de notification parmi les messages de notification pliés dans le message de notification plié.

7. Appareil pour afficher un message de notification, comprenant :
un module de réception (310), configuré pour recevoir un premier message de notification poussé par une application ;
un module de détection (320) configuré pour détecter l'existence d'un second message de notification parmi au moins un message de notification chargé dans une barre de notification, dans lequel le second message de notification inclut un contenu qui est similaire à celui du premier message de notification ;
un module de pliage (330), configuré pour plier le premier message de notification et le second message de notification en un message de notification plié, et afficher le message de notification plié dans la barre de notification ; et
un module d'évaluation (360), configuré pour déterminer si le second message de notification existe dans une liste de messages prédéterminée, dans lequel la liste de messages prédéterminée est configurée pour stocker des messages de notification reçus dans une période de temps antérieure à un instant actuel, dans lequel
lorsque le second message de notification existe dans la liste de messages prédéterminée et dans la barre de notification, le premier message de notification et le second message de notification sont pliés dans le message de notification plié et le message de notification plié est affiché dans la barre de notification, et aucun message-guide n'est affiché ; et
lorsque le second message de notification existe dans la liste de messages prédéterminée mais pas dans la barre de notification, le premier message de notification est affiché dans la barre de notification avec le au moins un message de notification dans un ordre prédéterminé, et aucun message-guide n'est affiché.

8. Appareil selon la revendication 7, comprenant en outre :
un premier module de déclenchement (340) configuré pour déterminer un type de l'application et détecter si le second message de notification existe ou non parmi le message de notification chargé dans la barre de notification lorsque le type de l'application est inclus dans un ensemble de types prédéfini, dans lequel l'ensemble de types prédéfini est configuré pour stocker le type de l'application poussant des messages de notification qui doivent être pliés et affichés dans la barre de notification ;
ou,
un second module de déclenchement (350), configuré pour déterminer un développeur de l'application et détecter si le second message de notification existe ou non parmi le message de notification chargé dans la barre de notification lorsque le développeur appartient à un ensemble de développeurs prédéfini, dans lequel l'ensemble de développeurs prédéfini est configuré pour stocker le développeur de l'application, poussant des messages de notification qui doivent être pliés et affichés dans la barre de notification.

9. Appareil selon la revendication 7 ou 8, dans lequel le module de détection (320) comprend :
un premier sous-module de détermination (321), configuré pour déterminer des informations clés du premier message de notification et des informations clés du au moins un message de notification chargé dans la barre de notification, dans lequel les informations clés du premier message de notification sont extraites d'un titre ou d'un contenu du premier message de notification et les informations clés du au moins un message de notification chargé dans la barre de notification sont extraites d'un titre ou d'un contenu du au moins un message de notification ;
un deuxième sous-module de détermination (322), configuré pour déterminer une similitude entre le premier message de notification et chaque au moins un message de notification chargé dans la barre de notification sur la base des informations clés du premier message de notification et des informations clés du au moins un message de notification chargé dans la barre de notification ; et
un troisième sous-module de détermination (323), configuré pour déterminer le message de notification du au moins un message de notification présentant une similitude par rapport au premier message de notification supérieure à la similitude prédéfinie en tant que second message de notification lorsque la similitude entre un message de notification du au moins un message de notification et le premier message de notification est supérieure à une similitude prédéfinie ; et/ou
dans lequel le module de détection (320) comprend en outre :
un quatrième sous-module de détermination (324), configuré pour déterminer un nombre de caractères identiques dans un titre de chaque au moins un message de notification chargé dans la barre de notification et dans un titre du premier message de notification ; et
un cinquième sous-module de détermination (325), configuré pour déterminer que le au moins un message de notification chargé dans la barre de notification inclut le second message de notification lorsqu'un rapport entre le nombre de caractères identiques et le nombre total de caractères dans le titre du premier message de notification est supérieur à un rapport prédéfini.

10. Appareil selon l'une quelconque des revendications 7 à 9, comprenant en outre au moins un parmi :
un premier module d'affichage (380), configuré pour recevoir une instruction configurée pour déplier le message de notification plié dans la barre de notification, et afficher chacun des messages de notification pliés dans un état déplié ; et
un second module d'affichage (390), configuré pour recevoir une instruction configurée pour visualiser un contenu du message de notification plié dans la barre de notification, et pour afficher un message de notification cible en démarrant une application poussant le message de notification cible, dans lequel le message de notification cible est un message de notification le plus ancien chargé dans la barre de notification parmi les messages de notification pliés dans le message de notification plié.

11. Dispositif d'affichage d'un message de notification, comprenant :
un processeur (420) ;
une mémoire (404) configurée pour stocker au moins une instruction exécutable par le processeur (420) ;
dans lequel le processeur (420) est configuré pour :
recevoir (101) un premier message de notification poussé par une application ;
détecter (102) l'existence d'un second message de notification parmi au moins un message de notification chargé dans une barre de notification, dans lequel le second message de notification inclut un contenu similaire à celui du premier message de notification ;
plier (103) le premier message de notification et le second message de notification en un message de notification plié ; et
afficher le message de notification plié dans la barre de notification ;
dans lequel le processeur (420) est en outre configuré pour :
déterminer si le second message de notification existe ou non dans une liste de messages prédéterminée, dans lequel la liste de messages prédéterminée est configurée pour stocker des messages de notification reçus dans une période de temps antérieure à un instant actuel, dans lequel
lorsque le second message de notification existe dans la liste de messages prédéterminée et dans la barre de notification, le premier message de notification et le second message de notification sont pliés en le message de notification plié et le message de notification plié est affiché dans la barre de notification, et aucun message-guide n'est affiché ; et
lorsque le second message de notification existe dans la liste de messages prédéterminée mais pas dans la barre de notification, le premier message de notification est affiché dans la barre de notification avec le au moins un message de notification dans un ordre prédéterminé, et aucun message-guide n'est affiché.

12. Produit de programme dans lequel sont stockées des instructions qui, lorsqu'elles sont exécutées par un ou plusieurs processeurs d'un appareil, amènent l'appareil à exécuter un procédé d'affichage d'un message de notification selon l'une quelconque des revendications 1 à 6.
